# FASCICULE DE BREVET EUROPEEN

(11) **EP 1 904 359 B1**
(45) Date de publication et mention de la délivrance du brevet: **08.09.2010**
(21) Numéro de dépôt: 06778037.9
(22) Date de dépôt: 30.06.2006
(51) Int. Cl.: B62D 5/04, B62D 7/15

(54) **SYSTEME DE DIRECTION D'UN VÉHICULE COMPORTANT UN MODE DE FONCTIONNEMENT DÉGRADÉ EN CAS DE PANNE D'UN ACTIONNEUR DE BRAQUAGE DE ROUE**
FAHRZEUGLENKSYSTEM MIT EINEM DEGRADIERTEN BETRIEBSMODUS IM FALLE EINES VERSAGENS EINES RADLENKSTELLGLIEDS
VEHICLE STEERING SYSTEM COMPRISING A DEGRADED OPERATING MODE IN CASE OF BREAKDOWN OF A WHEEL STEERING ACTUATOR

(30) Priorité: 04.07.2005 FR 0507178
(43) Date de publication de la demande: 02.04.2008
(73) Titulaire: Michelin Recherche et Technique S.A., 1763 Granges-Paccot (CH)
(72) Inventeur: AUGUET, Thierry, CH-1608 Chapelle Glâne (CH)
(74) Mandataire: Bauvir, Jacques
(86) Numéro de dépôt international: PCT/EP2006/064758
(87) Numéro de publication internationale: WO 2007/003661

(56) Documents cités:
- EP-A- 1 316 490
- US-A- 5 014 802
- US-A1- 2002 035 425
- US-A1- 2004 140 147

## Description

### DOMAINE DE L'INVENTION

La présente invention concerne les véhicules automobiles routiers pourvus d'un système de direction dont toutes les roues directrices sont commandées en braquage par un actionneur qui lui est propre. L'invention vise en particulier, parmi les systèmes de direction connus, ceux qui sont dépourvus de liaison mécanique entre les roues directrices et le volant et sont également dépourvus de liaison mécanique pour synchroniser le braquage entre roues directrices elles-mêmes.

### ETAT DE LA TECHNIQUE

On connaît des systèmes de direction électrique comportant un actionneur électrique individuel par roue directrice, le système de direction étant capable de braquer sélectivement chacune des roues directrices d'un angle qui lui est spécifique, la cohérence des braquages de chacune des roues directrices étant assurée par l'électronique de pilotage. L'actionneur électrique de chaque roue a pour fonction d'imposer à la roue considérée l'angle de braquage choisi par l'électronique de pilotage. La commande de direction à la disposition du conducteur du véhicule peut être un volant traditionnel ou une manette du genre manche à balai (joystick) ou tout autre dispositif convenable. Les ordres imprimés par le conducteur du véhicule sur son dispositif de commande sont envoyés à l'électronique de pilotage chargée de programmes adéquats afin de pouvoir piloter le ou les actionneurs de façon appropriée.

Un des avantages de cette technologie est qu'elle se marie de façon idéale avec l'électronique et l'informatique, dont les progrès permettent des asservissements de plus en plus sophistiqués, ce qui fait qu'il est possible de placer le braquage des roues non seulement sous le contrôle de la commande manuelle mais aussi sous le contrôle d'un système de sécurité. Ainsi par exemple, on peut imprimer aux roues directrices un angle qui tient non seulement compte de la commande du conducteur du véhicule, mais qui tient également compte des paramètres dynamiques observés sur le véhicule.

Grâce à la direction électrique, il s'ouvre un champ de possibilités beaucoup plus large pour agir sur la stabilité de trajectoire d'un véhicule. Par exemple, alors qu'à l'heure actuelle un système automatique de correction de la trajectoire du véhicule imprime des moments de lacets correctifs au moyen des freins d'une ou plusieurs roue, le passage à des commandes électriques des différentes fonctions sur un véhicule permettrait d'agir sur l'angle de braquage des différentes roues directrices du véhicule pour en corriger la trajectoire.

Mais le système de direction d'un véhicule est une fonction essentielle et vitale pour la sécurité, comme les freins. Dès lors, pour pouvoir se substituer aux directions mécaniques, assistées ou non, quasi universellement adoptées à l'heure actuelle sur tous les véhicules routiers, il est essentiel qu'un système de direction électrique soit extrêmement sûr. C'est pourquoi on conçoit généralement des systèmes électriques redondants permettant un fonctionnement du système même si l'un de ses composants est défaillant. C'est la notion de système tolérant aux pannes. L'ensemble des fonctionnalités est assuré en cas de défaillance d'un des composants du système, ou au moins celles jugées les plus importantes. Ainsi, par exemple, les parties électriques des actionneurs de roues sont de préférence redondantes. On consultera à ce sujet par exemple la demande de brevet US 2003/0098197, qui décrit le préambule de la revendication 1, donnant un exemple de système redondant pour la commande d'une direction électrique.

Le brevet US 5,014,802 décrit un système de direction pour véhicule à quatre roues toutes directrices qui propose de, lorsqu'une première roue directrice parvient en butée de braquage et que le conducteur souhaite augmenter encore le braquage, respecter l'épure de Jeantaud afin d'éviter le ripage des roues sur le sol dans toutes les circonstances de braquage. Même si les inventeurs ont prévus d'appliquer l'invention à un système où toutes les roues sont commandées individuellement, l'éventualité d'une panne et les stratégies à adopter dans ce cas restent complètement étrangères à cette description.

Or on ne peut jamais exclure totalement la survenance d'une défaillance d'un composant essentiel. Par exemple, un actionneur électrique de roue peut tomber en panne de telle façon qu'il prend une position angulaire indifférente, situation dans laquelle il est incapable de transmettre des efforts de braquage (ou de maintien en ligne droite). Ou encore il peut rester bloqué dans une certaine position angulaire, par exemple en ligne droite, du fait d'une avarie mécanique. C'est le cas du blocage d'un actionneur que traite la présente demande de brevet.

parmi les solutions connues, la demande de brevet US 2004/0140147 propose de piloter l'autre actionneur de roue du même essieu selon une consigne de position angulaire modifiée, afin que globalement l'essieu développe une poussée transversale aussi peu différente que possible de la poussée que l'on aurait obtenue sans panne d'actionneur. Cette solution présente l'inconvénient de provoquer l'apparition de contraintes antagonistes, notamment dans les pneumatiques. Il est donc souhaitable de ne l'adopter qu'en dernier ressort. Il subsiste un besoin de trouver des solutions qui permettent de faire face au blocage d'un actionneur électrique sans développer de tels efforts antagonistes.

L'objectif de l'invention est donc de, en cas d'impossibilité de changer l'angle de braquage d'une des roues directrices, pouvoir maintenir autant que possible le contrôle de la trajectoire du véhicule selon le souhait de son conducteur, de préférence sans faire riper les roues, au moins afin de pouvoir ranger le véhicule là où ses passagers sont en sécurité.

Un autre objectif de l'invention est de, lorsqu'il s'avère impossible d'éviter le ripage des roues, pouvoir malgré tout adopter une stratégie de pilotage du braquage des roues non bloquées la plus appropriée à la situation pour au moins pouvoir ranger le véhicule là où ses passagers sont en sécurité.

### BREVE DESCRIPTION DE L'INVENTION

L'invention propose un système de commande de direction pour véhicule terrestre à au moins quatre roues directrices, le système comportant un actionneur par roue directrice, le système comportant un capteur d'angle réel de braquage de chacune des roues directrices, le système comportant un organe de commande à la disposition d'un conducteur et délivrant un angle de braquage demandé, ledit système de direction comportant une unité de pilotage du braquage utilisant comme variable d'entrée au moins ledit angle de braquage demandé pour déterminer un angle de pilotage du braquage pour opérer ledit actionneur, **caractérisé en ce que** le système comporte des moyens de détection d'un blocage d'un des actionneurs de roue directrice, lesdits moyens étant capables de délivrer, en cas de blocage détecté, un signal d'alerte identifiant l'actionneur bloqué, ladite unité de pilotage du braquage ayant au moins un mode normal et au moins un mode dégradé en cas de blocage d'un actionneur, le mode dégradé calculant l'angle de pilotage du braquage des roues non bloquées en imposant une première stratégie de mode dégradé par laquelle le centre instantané de rotation du véhicule est situé sensiblement sur la droite perpendiculaire au plan de la roue bloquée et passant par le centre de l'aire de contact au sol de la roue bloquée, à une position fonction de l'angle de braquage demandé.

On peut qualifier le fonctionnement proposé ci-dessus de « mode dégradé ». Toutes les fonctionnalités ne sont plus assurées, mais la sécurité de fonctionnement du véhicule reste assurée au mieux en fonction des circonstances. Le mode dégradé va permettre un fonctionnement du système de direction du véhicule certes moins agréable, mais évitant toute conséquence tragique pour les passagers du véhicule.

Bien entendu, les directions à actionneur électrique, répondant par ailleurs aux caractéristiques indiquées en préambule ci-dessus, offrent un champ d'application privilégié de l'invention. Cependant, ce n'est pas limitatif, des systèmes de direction hydrauliques pouvant aussi être construits selon ce que propose l'invention.

L'équilibre dynamique d'un véhicule est d'autant plus important pour la sécurité que la vitesse de déplacement du véhicule est élevée. Il est à noter que, en déplacement à des vitesses soutenues, les angles de braquage des roues sont toujours assez faibles. S'il survient un blocage d'une roue en position légèrement braquée, lors du retour en ligne droite commandé par un angle au volant égal à zéro, le principe proposé par l'invention fait que le véhicule se déplacera en crabe en mode dégradé, c'est-à-dire selon un angle non nul entre l'axe longitudinal du véhicule et la direction de déplacement du véhicule. Cela est tout à fait acceptable car ledit angle est assez faible. Cet angle pourrait prendre des valeurs importantes si la panne d'un actionneur survient à basse vitesse ; il en résultera un angle caractéristique d'une trajectoire en crabe plus important, ce qui n'est peut être pas très agréable mais pas du tout dangereux vu la faible vitesse à laquelle interviendra ce type de mode dégradé.

De préférence, le système de commande de direction selon l'invention comporte au moins une deuxième stratégie de pilotage en mode dégradé basée sur un positionnement du CIR fonction de la 1^{ère} roue non bloquée qui va arriver en butée mécanique.

Bien entendu, ce qui a été proposé ci-dessus n'offre qu'un mode de fonctionnement dégradé à ne faire intervenir qu'après d'autres tentatives d'action, lorsque le système de direction, malgré la présence d'éléments redondants dans ledit système de direction, est devenu incapable d'imposer à une des roues directrices des angles de braquage correspondant soit à la volonté du conducteur, soit à ce que calcule un système de gestion électronique de la trajectoire du véhicule. Ces modes dégradés peuvent être complétés par d'autres stratégies qui agissent ou non sur le braquage de certaines roues.

### BREVE DESCRIPTION DES FIGURES

L'invention est illustrée au moyen des figures jointes sur lesquelles :
- la figure 1 est un schéma d'implantation d'un système de direction électrique selon l'invention.
- la figure 2 montre un véhicule à quatre roues toutes directrices, dans une configuration de braquage vers la droite pendant laquelle intervient un blocage de l'actionneur de roue avant droite ;
- la figure 3 montre la situation de ce véhicule en fonctionnement en mode dégradé permettant au véhicule de rouler en ligne droite ;
- la figure 4 montre la situation de ce véhicule en fonctionnement en mode dégradé permettant au véhicule de braquer à gauche ;
- la figure 5 schématise les stratégies de mode dégradé pour un véhicule à quatre roues toutes directrices, dans une configuration de braquage vers la droite pendant laquelle intervient un blocage de l'actionneur de roue avant droite.

### DESCRIPTION DES MODES DE REALISATION PREFERES DE L'INVENTION

Avant de poursuivre, convenons des différentes notations suivantes :
- lorsqu'une référence est accompagnée d'un indice « _{Av} », cela signifie que l'objet désigné par la référence concerne l'avant du véhicule et lorsqu'une référence est accompagnée d'un indice « _{Ar} », cela signifie que l'objet désigné par la référence concerne l'arrière du véhicule ;
- lorsqu'une référence est accompagnée d'un indice « _{D} », cela signifie que l'objet désigné par la référence concerne le côté droit du véhicule et lorsqu'une référence est accompagnée d'un indice « _{G} », cela signifie que l'objet désigné par la référence concerne le côté gauche du véhicule.
- lorsqu'une référence est accompagnée d'un indice « _{B} », cela signifie que l'objet désigné par la référence possède un actionneur bloqué et lorsqu'une référence est accompagnée d'un indice « _{NB} », cela signifie que l'objet désigné par la référence possède un actionneur non bloqué.

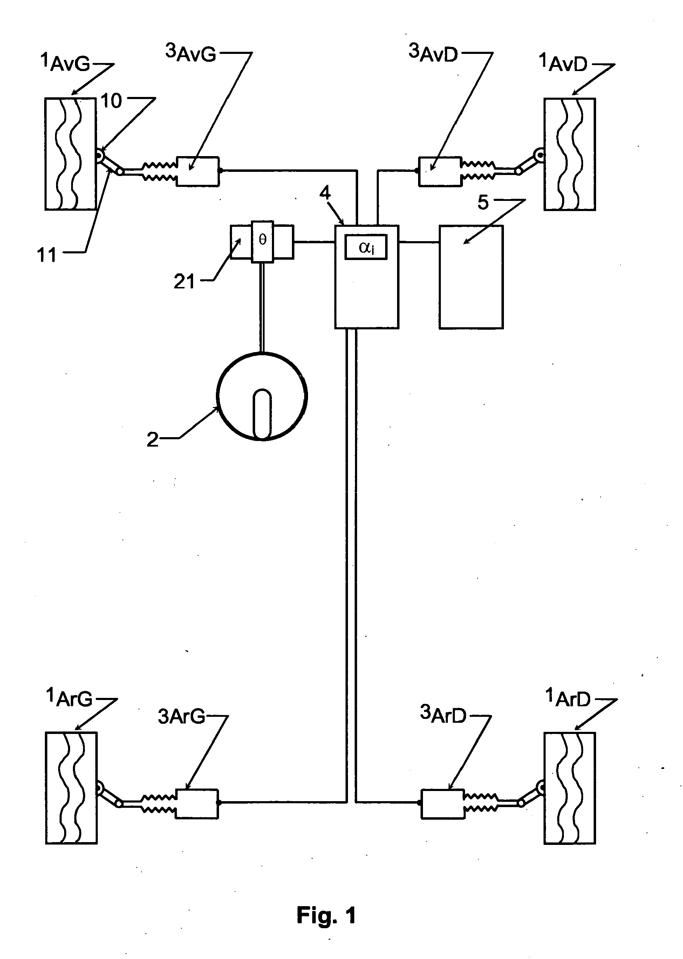

A la figure 1, on a schématisé un véhicule à quatre roues 1 toutes directrices. Les roues directrices sont montées sur un porte-roue (non visible) et braquent autour d'un axe de pivot 10. Un levier 11 de commande du braquage est monté solidaire du porte-roue. Chaque roue directrice est braquée par un actionneur électrique 3 relié d'une part à la caisse ou au châssis du véhicule et d'autre part au levier 11, pour commander l'angle de braquage de la roue considérée. Chaque actionneur électrique 3 comporte par exemple un dispositif vis/écrou (non représenté), actionné par un moteur électrique rotatif. La vis du dispositif vis/écrou est reliée au levier 11 de commande de braquage. Chaque actionneur comporte de préférence un capteur de position pour, au besoin par construction géométrique et calculs associés, connaître à partir de la mesure délivrée par le capteur de position la position angulaire exacte de la roue directrice considérée. A titre d'exemple, on peut utiliser les actionneurs électriques décrits dans le brevet US6820715.

On voit aussi un volant 2 relié mécaniquement à un dispositif 21 de mesure de l'angle « θ » au volant. « θ » désigne toute valeur particulière (en amplitude et en signe) caractérisant la commande que le conducteur impose sur un organe de commande pour agir sur la direction du véhicule ; par exemple, il s'agit d'un volant que l'on manoeuvre sur une plage angulaire prédéterminée (la notion d'angle n'est pas limitative dans la mesure où l'on peut substituer au volant tout dispositif équivalent comme un joystick ou un curseur).

Le système comporte des moyens de détection 5 d'un blocage d'un des actionneurs de roue directrice capable de délivrer, en cas de blocage détecté, un signal d'alerte identifiant l'actionneur bloqué. Pour détecter le blocage, on peut par exemple mesurer le courant absorbé par l'actionneur et le comparer aux changements de position dudit actionneur. Si le courant se maintient à un niveau élevé ou même augmente alors que la position de l'actionneur ne varie plus, on peut en déduire qu'il est bloqué. On peut le mettre hors service électriquement et basculer en mode dégradé.

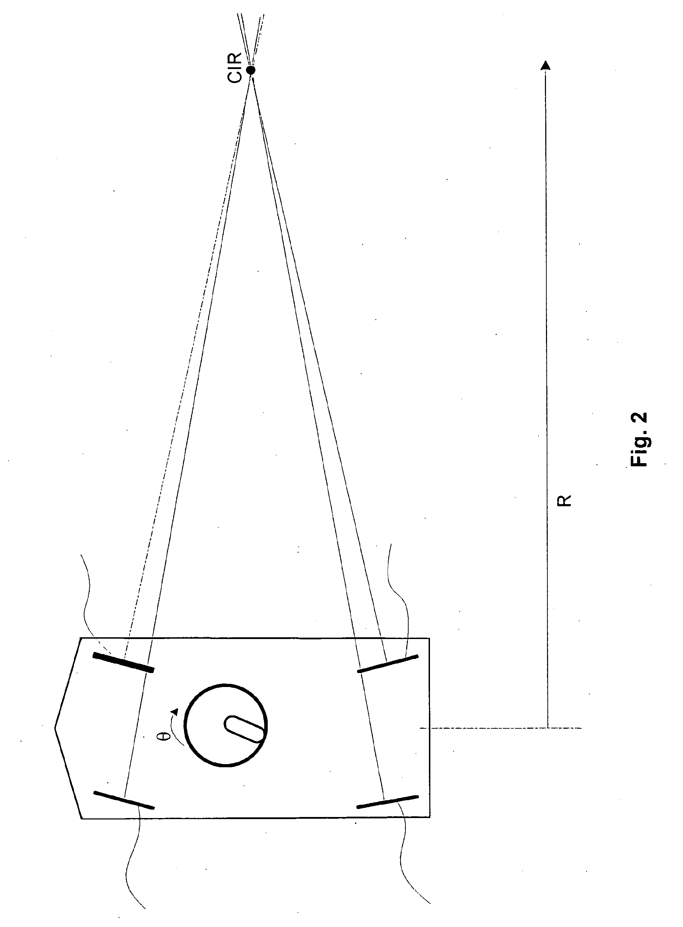

Les figures 2 à 4 donnent une illustration de la première stratégie de calcul des angles de pilotage des actionneurs non bloqués du mode dégradé proposé par la présente invention. On montre ici le cas où survient un blocage de l'actionneur avant droit pendant un virage à droite. Le mode dégradé calcule l'angle de pilotage du braquage αpᵢ des roues non bloquées 1_{NB}, c'est dire les angles αp_{AvG}, αp_{ArD}, αp_{ArG}. Pour éviter le ripage des roues, le centre instantané de rotation CIR du véhicule doit être maintenu sensiblement sur la droite perpendiculaire au plan de la roue avant droite 1_{AvD}, la roue bloquée, et passant par le centre de l'aire de contact au sol de ladite roue avant droite 1_{AvD.} La position précise du CIR sur ladite droite perpendiculaire est fonction de l'angle de braquage demandé θ, lequel correspond à un rayon de braquage R souhaité par le conducteur. Notons que le calcul de ce rayon ne fait pas partie de la présente invention, laquelle est compatible avec de multiples façons de déterminer le rayon R.

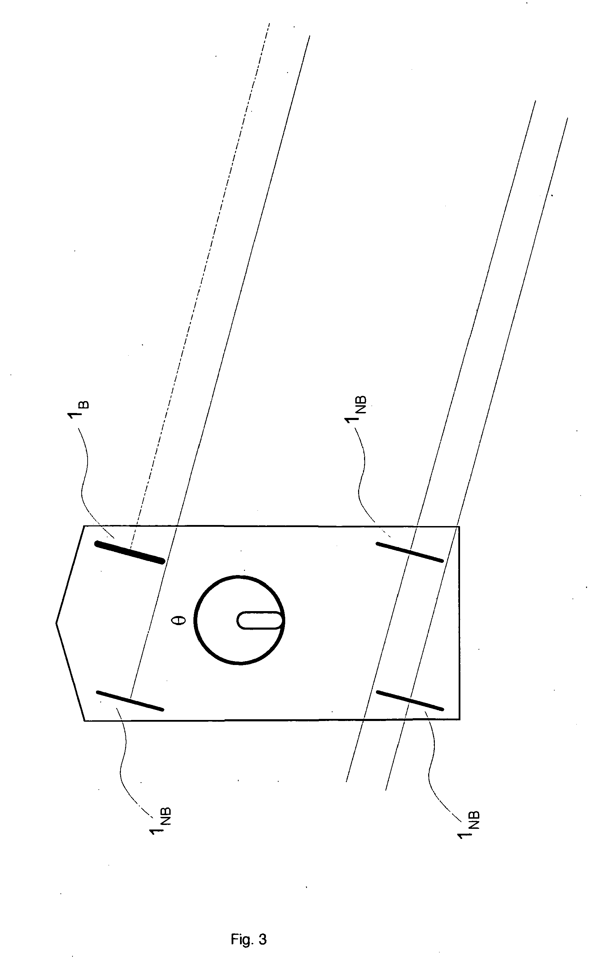

Si à partir de la situation illustrée à la figure 2, le conducteur diminue l'angle de braquage demandé θ, c'est à dire souhaite augmenter le rayon de braquage R, le CIR va se déplacer du coté droit sur la droite représentée en traits d'axe, c'est-à-dire qu'il va s'éloigner du véhicule. Si le conducteur souhaite ramener le véhicule en ligne droite, on obtient la configuration illustrée à la figure 3. Le rayon R tend alors vers l'infini, l'angle de pilotage des actionneurs de roues non bloqués 1_{NB} est identique sur toutes les roues et vaut l'angle de l'actionneur de la roue bloquée 1_{AvD}. Le CIR est repoussé à l'infini, ce qui permit un roulage en ligne droite. Le véhicule, en fonctionnement en mode dégradé, roule en ligne droite dans une attitude dite « en crabe ».

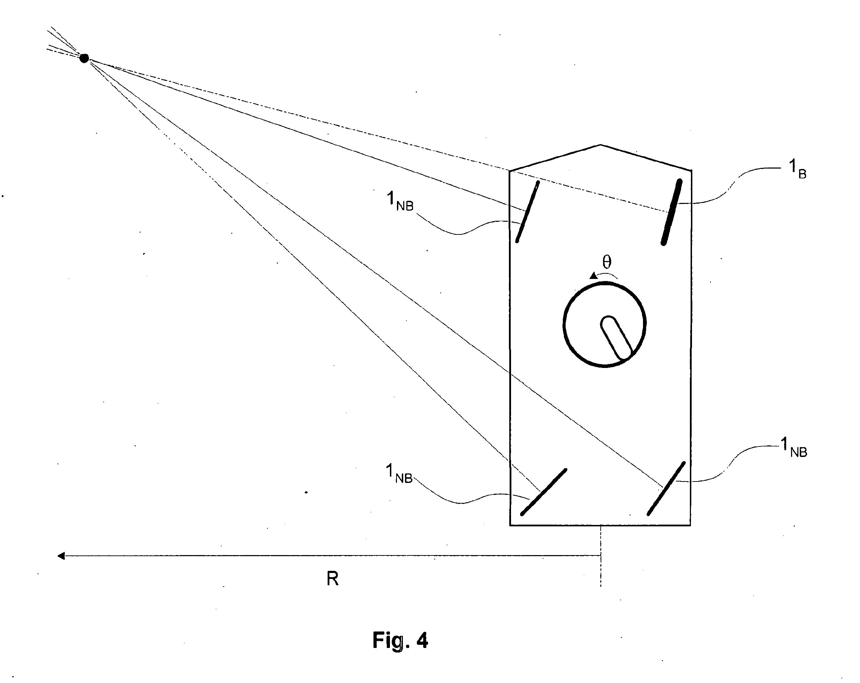

La figure 4 montre la situation de ce véhicule en fonctionnement en mode dégradé à partir du blocage illustré à la figure 2, si le conducteur veut maintenant braquer son véhicule à gauche. Par rapport à la roue bloquée 1_{AvD}, les autres roues non bloquées 1_{NB} sont braquées de façon à positionner le CIR toujours sur la droite représentée en traits d'axe, perpendiculaire à la roue bloquée 1_{AvD}, du coté gauche par rapport au véhicule.

L'invention propose ainsi une première stratégie de mode dégradé qui permet de faire braquer toutes les roues directrices autour du même centre instantané de rotation CIR qui est maintenu sensiblement sur la droite perpendiculaire au plan de la roue avant droite 1_{AvD}, la roue bloquée. Cela permet de respecter l'épure de Jeantaud, et par voie de conséquence d'éviter le ripage des roues sur le sol. Mais selon la position initiale dans laquelle l'une des roues directrices est bloquée, à partir d'une certaine amplitude de la variation de braquage demandée par le conducteur depuis le blocage d'une des roues directrices, il ne sera plus possible d'imprimer au véhicule le mouvement de lacet souhaité par le conducteur sans accepter un certain ripage des roues sur le sol. En effet, pour répondre à cette variation de braquage demandée par le conducteur, il faudrait alors braquer au moins une des roues non bloquées du véhicule au delà de la limite mécanique de braquage prévue par construction du véhicule, ce qui est évidemment impossible. Il ne sera plus possible de maintenir le centre instantané de rotation CIR sensiblement sur la droite perpendiculaire au plan de la roue avant droite 1_{AvD}, la roue bloquée.

L'invention propose une deuxième et une troisième stratégies de mode dégradé par lesquelles on parvient en général, c'est à dire dans la plupart des situations rencontrées en pratique, à imprimer un mouvement de lacet dans le sens souhaité par le conducteur. Cela peut provoquer un certain ripage des roues sur le sol, ripage tout à fait acceptable pendant une manoeuvre de durée normalement assez brève et permettant de maintenir, malgré une panne, la capacité de contrôler la trajectoire du véhicule.

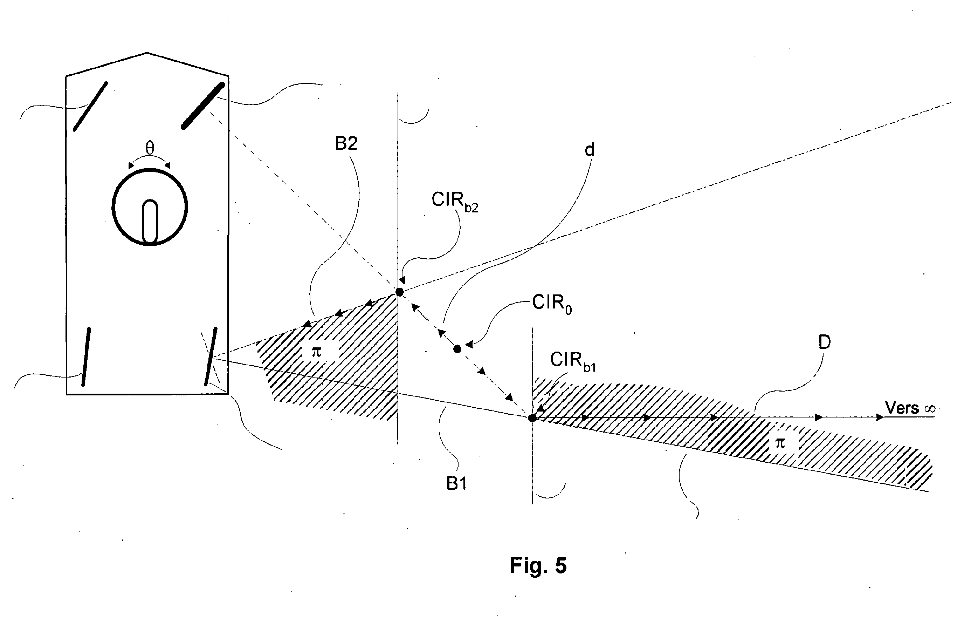

C'est ce qui est expliqué en s'appuyant sur la figure 5, qui schématise les stratégies de mode dégradé pour un véhicule à quatre roues toutes directrices, dans une configuration de braquage vers la droite pendant laquelle intervient un blocage de l'actionneur de roue avant droite.

Supposons que, au moment du blocage de l'actionneur avant droit, le véhicule tournait autour du centre instantané de rotation CIR₀. Supposons ensuite que le conducteur veut sortir du virage, c'est à dire veut augmenter progressivement le rayon de braquage R. L'application de la première stratégie de mode dégradé fait cheminer le CIR sur la droite « d » dans un sens qui tend à l'éloigner du véhicule jusqu'à la position CIR_{b1} qui est le centre instantané de rotation (CIR_{b1}) effectif au moment où ladite butée de braquage a été atteinte. A ce stade, étant donné la configuration du véhicule, admettons que l'actionneur arrière droit parvient en butée de braquage. L'allongement du rayon de braquage voudrait que l'on augmente encore l'angle de braquage à droite de la roue arrière droite, ce qui est impossible.

Dans ce cas, lorsqu'en outre l'angle de braquage piloté parvient en butée pour l'un des actionneurs non bloqués et l'évolution dudit angle de braquage demandé θ correspond à une augmentation du rayon de braquage du véhicule, ladite unité de pilotage du braquage impose une deuxième stratégie de mode dégradé par laquelle le lieu du centre instantané de rotation CIR du véhicule est borné par la droite B1 perpendiculaire au plan de la roue en butée passant par le centre de l'aire de contact au sol de ladite roue en butée, roue arrière droite ici, et est situé dans le demi-plan π1 vers l'avant du véhicule par rapport à ladite borne B1, et du côté vers l'infini par rapport à une droite d2 parallèle à l'axe longitudinal du véhicule et passant par passant par le centre instantané de rotation CIR_{b1} effectif au moment où ladite butée de braquage a été atteinte.

Avantageusement, le centre instantané de rotation CIR de la deuxième stratégie de mode dégradé est sur une droite D parallèle à la direction transversale par rapport au véhicule, passant par le centre instantané de rotation CIR_{b1} effectif au moment où ladite butée de braquage a été atteinte. Le CIR se déplace sur la droite D ; la roue ARD n'est alors plus en butée. Cette deuxième stratégie de mode dégradé permet d'augmenter progressivement le rayon de braquage R afin de satisfaire la demande de braquage du conducteur, tout en limitant autant que possible le ripage des roues sur le sol.

Supposons maintenant que le virage se resserre. Le conducteur voudra donc diminuer progressivement le rayon de braquage R. L'application de la première stratégie de mode dégradé fait cheminer le CIR sur la droite « d » dans un sens qui tend à le rapprocher du véhicule jusqu'à la position CIR_{b2}, qui est le centre instantané de rotation (CIR_{b2}) effectif au moment où l'autre butée de braquage a été atteinte par la roue ARD. A ce stade, étant donné la configuration du véhicule, admettons que l'actionneur arrière droit parvient en butée de braquage. La diminution du rayon de braquage voudrait que l'on augmente encore l'angle de braquage à gauche de la roue arrière droite, ce qui est impossible.

Dans ce cas, lorsqu'en outre l'angle de braquage piloté parvient en butée pour l'un des actionneurs non bloqués et que l'évolution dudit angle de braquage demandé θ correspond à une diminution du rayon de braquage demandé par le conducteur, ladite unité de pilotage du braquage impose une troisième stratégie de mode dégradé par laquelle le lieu du centre instantané de rotation CIR du véhicule est borné par la droite (B2) perpendiculaire au plan de la roue en butée, roue arrière droite ici, passant par le centre de l'aire de contact au sol de ladite roue en butée, le lieu du centre instantané de rotation CIR étant d'une part situé dans le demi-plan π2 s'étendant vers l'arrière du véhicule par rapport à ladite borne, et d'autre part du côté du véhicule par rapport à une droite d3 parallèle à l'axe longitudinal du véhicule et passant par le centre instantané de rotation CIR_{b2} effectif au moment où ladite autre butée de braquage a été atteinte.

Avantageusement, le centre instantané de rotation CIR de la troisième stratégie de mode dégradé est sur la droite B2 perpendiculaire au plan de la roue en butée passant par le centre de l'aire de contact au sol de ladite roue en butée.

Enfin, remarquons que le blocage accidentel d'un actionneur de roue est un phénomène proche du cas d'un actionneur en butée. Dès lors, l'invention peut aussi trouver application au cas où, bien que l'un des actionneurs soit en butée, on veut diminuer encore le rayon de braquage du véhicule, bien évidemment en acceptant que les roues se mettent à riper. On peut appliquer alors la troisième stratégie de mode dégradé, en considérant que l'actionneur bloqué et l'actionneur en butée sont un seul et même actionneur.

L'invention a été illustrée par des applications à un véhicule à quatre roues, toutes directrices. Ceci n'est cependant nullement limitatif. Le véhicule peut comporter un nombre quelconque de roues, et pas nécessairement toutes directrices. Par exemple, prenons le cas d'un véhicule à 8 roues toutes directrices. La gestion du CIR du véhicule en mode normal permet de calculer un angle braquage pour chacune des huit roues. Imaginons qu'une des huit roues se bloque. On cale alors le CIR sur la droite perpendiculaire au plan de la roue bloquée et on pilote l'angle de braquage des 7 autres roues pour qu'elles tournent toutes autour de ce CIR. Les 2^{ème} et 3^{ème} stratégies de pilotage en mode dégradé, acceptant un certain ripage des roues, sont basées sur un positionnement du CIR fonction de la 1^{ère} roue non bloquée qui va arriver en butée mécanique. Peu importe qu'il y en ait 3 ou 7. Le principe reste le même.

## Revendications

1. Système de commande de direction pour véhicule terrestre à au moins quatre roues directrices (1AvG, 1AvD, 1ArG, 1ArD), le système comportant un actionneur par roue directrice (3AvG, 3AvD, 3ArG, 3ArD), le système comportant un capteur d'angle réel de braquage (αr_{AvG}, αr_{AvD}, αr_{ArG}, αr_{ArD}) de chacune des roues directrices, le système comportant un organe de commande (2) à la disposition d'un conducteur et délivrant un angle de braquage demandé (θ), ledit système de direction comportant une unité de pilotage (4) du braquage utilisant comme variable d'entrée au moins ledit angle de braquage demandé (θ) pour déterminer un angle de pilotage du braquage (αp_{AvG}, αp_{AvD}, αp_{ArG}, αp_{ArD}) pour opérer ledit actionneur,
**caractérisé en ce que**
le système comporte des moyens de détection d'un blocage (5) d'un des actionneurs de roue directrice, lesdits moyens étant capables de délivrer, en cas de blocage détecté, un signal d'alerte identifiant l'actionneur bloqué, ladite unité de pilotage du braquage ayant au moins un mode normal et au moins un mode dégradé en cas de blocage d'un actionneur, le mode dégradé calculant l'angle de pilotage du braquage (αpᵢ) des roues non bloquées en imposant une première stratégie de mode dégradé par laquelle le centre instantané de rotation (CIR) du véhicule est situé sensiblement sur la droite perpendiculaire au plan de la roue bloquée et passant par le centre de l'aire de contact au sol de la roue bloquée, à une position fonction de l'angle de braquage demandé (θ).

2. Système de direction selon la revendication 1 dans lequel, lorsqu'en outre l'angle de braquage piloté parvient en butée pour l'un des actionneurs non bloqués, le système de commande de direction selon l'invention comporte au moins une deuxième stratégie de pilotage en mode dégradé basée sur un positionnement du CIR fonction de la 1^{ère} roue non bloquée qui va arriver en butée mécanique.

3. Système de direction selon la revendication 2 dans lequel, lorsqu'en outre l'angle de braquage piloté parvient en butée pour l'un des actionneurs non bloqués et l'évolution dudit angle de braquage demandé (θ) correspond à une augmentation du rayon de braquage du véhicule, ladite unité de pilotage du braquage impose une deuxième stratégie de mode dégradé par laquelle le lieu du centre instantané de rotation CIR du véhicule est borné par la droite (B1) perpendiculaire au plan de la roue en butée passant par le centre de l'aire de contact au sol de ladite roue en butée, et est situé dans le demi-plan (π1) vers l'avant du véhicule par rapport à ladite borne (B1), et du côté vers l'infini par rapport à une droite (d2) parallèle à l'axe longitudinal du véhicule et passant par le centre instantané de rotation (CIR_{b1}) effectif au moment où ladite butée de braquage a été atteinte.

4. Système de direction selon la revendication 3 dans lequel le centre instantané de rotation CIR de la deuxième stratégie de mode dégradé est sur une droite (D) parallèle à la direction transversale par rapport au véhicule, passant par le centre instantané de rotation (CIR_{b1}) effectif au moment où ladite butée de braquage a été atteinte.

5. Système de direction selon la revendication 2 ou 3 dans lequel, lorsqu'en outre l'angle de braquage piloté parvient en butée pour l'un des actionneurs non bloqués et que l'évolution dudit angle de braquage demandé (θ) correspond à une diminution du rayon de braquage demandé par le conducteur, ladite unité de pilotage du braquage impose une troisième stratégie de mode dégradé par laquelle le lieu du centre instantané de rotation CIR du véhicule est borné par la droite (B2) perpendiculaire au plan de la roue en butée passant par le centre de l'aire de contact au sol de ladite roue en butée, et est situé dans le demi-plan (π2) vers l'arrière du véhicule par rapport à ladite borne, et du côté du véhicule par rapport à une droite (d3) parallèle à l'axe longitudinal du véhicule et passant par le centre instantané de rotation (CIR_{b2}) effectif au moment où l'autre butée de braquage a été atteinte.

6. Système de direction selon la revendication 5 dans lequel le centre instantané de rotation CIR de la troisième stratégie de mode dégradé est sur la droite (B2) perpendiculaire au plan de la roue en butée passant par le centre de l'aire de contact au sol de ladite roue en butée.

7. Système de direction selon l'une quelconque des revendications précédentes, dans lequel les actionneurs de roue sont électriques.

## Claims

1. Steering control system for a land vehicle with at least four steered wheels (1AvG, 1AvD, 1ArG, 1ArD), the system comprising one actuator per steered wheel (3AvG, 3AvD, 3ArG, 3ArD), the system comprising an actual steering angle sensor (αr_{AvG}, αr_{AvD}, (αr_{ArG}, αr_{ArD}) for each of the steered wheels, the system comprising a control member (2) available to a driver and delivering a demanded steering angle (θ), the said steering system comprising a steering control unit (4) which, by way of input variable, uses at least the said demanded steering angle (θ) to determine a steering control angle (αp_{AvG}, αp_{AvD}, αp_{ArG}, αp_{ArD}) for operating the said actuator,
**characterized in that**
the system comprises means (5) for detecting a lock-up of one of the steered-wheel actuators, the said means being capable, should a lock-up be detected, of delivering an alarm signal identifying which actuator has locked up, the said steering control unit having at least one normal mode and at least one degraded mode in the event of an actuator becoming locked up, the degraded mode calculating the steering control angle (αpᵢ) of the non-locked wheels by imposing a first degraded-mode strategy whereby the instantaneous centre of rotation (CIR) of the vehicle lies more or less on the straight line perpendicular to the plane of the locked wheel and passing through the centre of the ground-contact area of the locked wheel, in a position that is dependent on the demanded steering angle (θ).

2. Steering system according to Claim 1 in which, when, in addition, the controlled steering angle reaches the end of its travel in respect of one of the actuators that has not locked up, the steering control system according to the invention comprises at least one second degraded-mode control strategy based on positioning the CIR as a function of the 1^{st} non-locked wheel that mechanically reaches the end of its travel.

3. Steering system according to Claim 2 in which, when, in addition, the controlled steering angle reaches the end of its travel in respect of one of the actuators that is not locked up, and the change in the said demanded steering angle (θ) corresponds to an increase in the turning circle of the vehicle, the said steering control unit imposes a second degraded-mode strategy whereby the locus of the instantaneous centre of rotation CIR of the vehicle is bounded by the straight line (B1) perpendicular to the plane of the wheel that has reached the end of its travel passing through the centre of the ground-contact area of that said wheel, and lies in the half-plane (π1) towards the front of the vehicle with respect to the said boundary (B1), and on the side towards infinity with respect to a straight line (d2) parallel to the longitudinal axis of the vehicle and passing through the instantaneous centre of rotation (CIR_{b1}) that is live at the instant that wheel reached the end of its steering travel.

4. Steering system according to Claim 3, in which the instantaneous centre of rotation CIR for the second degraded-mode strategy lies on a straight line (D) parallel to the transverse direction with respect to the vehicle, passing through the instantaneous centre of rotation (CIR_{b1}) that is live at the instant that wheel reached the end of its steering travel.

5. Steering system according to Claim 2 or 3, in which, when, in addition, the controlled steering angle reaches the end of its travel in respect of one of the actuators that is not locked up and the change in the said demanded steering angle (θ) corresponds to a reduction in the turning circle demanded by the driver, the said steering control unit imposes a third degraded-mode strategy whereby the locus of the instantaneous centre of rotation CIR of the vehicle is bounded by the straight line (B2) perpendicular to the plane of the wheel that has reached the end of its travel passing through the centre of the ground-contact area of that said wheel and lies in the half-plane (π2) towards the rear of the vehicle with respect to the said boundary, and on the vehicle side with respect to a straight line (d3) parallel to the longitudinal axis of the vehicle and passing through the instantaneous centre of rotation (CIR_{b2}) that is live at the instant that other wheel reaches the end of its steering travel.

6. Steering system according to Claim 5, in which the instantaneous centre of rotation CIR of the third degraded-mode strategy lies on the straight line (B2) perpendicular to the plane of the wheel that has reached the end of its travel passing through the centre of the ground-contact area of that said wheel.

7. Steering system according to any one of the preceding claims, in which the wheel actuators are electric actuators.

## Patentansprüche

1. Lenksteuersystem für ein Landfahrzeug mit mindestens vier gelenkten Rädern (1AvG, 1AvD, 1ArG, 1ArD), wobei das System einen Aktor pro gelenktes Rad (3AvG, 3AvD, 3ArG, 3ArD) aufweist, wobei das System einen Sensor des reellen Einschlagwinkels (αr_{AvG}, αr_{AvD}, αr_{ArG}, αr_{ArD}) jedes der gelenkten Räder aufweist, wobei das System ein Steuerorgan (2) aufweist, das einem Fahrer zur Verfügung steht und einen geforderten Einschlagwinkel (θ) liefert, wobei das Lenksystem eine Steuereinheit (4) des Einschlags liefert, die als Eingangsvariable mindestens den geforderten Einschlagwinkel (θ) verwendet, um einen Steuerwinkel des Einschlags (αp_{AvG}, αp_{AvD}, αp_{ArG}, αp_{ArD}) zur Betätigung des Aktors zu bestimmen,
**dadurch gekennzeichnet, dass** das System Einrichtungen zur Erfassung einer Blockierung (5) eines der Aktoren eines gelenkten Rads aufweist, wobei die Einrichtungen im Fall einer erfassten Blockierung ein Alarmsignal liefern können, das den blockierten Aktor identifiziert, wobei die Steuereinheit des Einschlags mindestens einen Normalbetrieb und mindestens einen Notbetrieb im Fall der Blockierung eines Aktors hat, wobei der Notbetrieb den Steuerwinkel des Einschlags (αpᵢ) der nicht blockierten Räder berechnet, indem er eine erste Notbetriebstrategie aufzwingt, durch die der Momentandrehpunkt (CIR) des Fahrzeugs sich im Wesentlichen auf der zur Ebene des blockierten Rads lotrechten und durch die Mitte des Bodenkontaktbereichs des blockierten Rads gehenden Geraden in einer vom geforderten Einschlagwinkel (θ) abhängenden Position befindet.

2. Lenksystem nach Anspruch 1, bei dem, wenn außerdem der gesteuerte Einschlagwinkel für einen der nicht blockierten Aktoren in Anschlag kommt, das erfindungsgemäße Lenksteuersystem mindestens eine zweite Notbetrieb-Steuerstrategie aufweist, die auf einer Positionierung des CIR in Abhängigkeit von dem ersten nicht blockierten Rad basiert, das in mechanischen Anschlag kommt.

3. Lenksystem nach Anspruch 2, bei dem, wenn außerdem der gesteuerte Einschlagwinkel für einen der nicht blockierten Aktoren in Anschlag kommt und die Entwicklung des geforderten Einschlagwinkels (θ) einer Vergrößerung des Einschlagradius des Fahrzeugs entspricht, die Steuereinheit des Einschlags eine zweite Notbetriebstrategie aufzwingt, durch die die Stelle des Momentandrehpunkts CIR des Fahrzeugs von der Geraden (B1) lotrecht zur Ebene des in Anschlag befindlichen Rads, die durch die Mitte des Bodenkontaktbereichs des in Anschlag befindlichen Rads geht, begrenzt wird, und sich in der Halbebene (π1) in Richtung der Vorderseite des Fahrzeugs bezüglich der Grenze (B1), und auf der gegen Unendlich gehenden Seite bezüglich einer Geraden (d2) parallel zur Längsachse des Fahrzeugs und durch den Momentandrehpunkt (CIR_{b1}) verlaufend befindet, der in dem Moment effektiv ist, in dem der Einschlaganschlag erreicht wurde.

4. Lenksystem nach Anspruch 3, bei dem der Momentandrehpunkt CIR der zweiten Notbetriebstrategie sich auf einer Geraden (D) parallel zur Querrichtung bezüglich des Fahrzeugs befindet, die durch den Momentandrehpunkt (CIR_{b1}) verläuft, der in dem Moment effektiv ist, in dem der Einschlaganschlag erreicht wurde.

5. Lenksystem nach Anspruch 2 oder 3, bei dem, wenn außerdem der gesteuerte Einschlagwinkel für einen der nicht blockierten Aktoren in Anschlag kommt, und wenn die Entwicklung des geforderten Einschlagwinkels (θ) einer Verkleinerung des vom Fahrer geforderten Einschlagradius entspricht, die Steuereinheit des Einschlags eine dritte Notbetriebstrategie aufzwingt, durch die die Stelle des Momentandrehpunkts CIR des Fahrzeugs von der Geraden (B2) lotrecht zur Ebene des in Anschlag befindlichen Rads, die durch die Mitte des Bodenkontaktbereichs des in Anschlag befindlichen Rads geht, begrenzt wird und sich in der Halbebene (π2) in Richtung zur Rückseite des Fahrzeugs bezüglich der Grenze, und auf der Seite des Fahrzeugs bezüglich einer Geraden (d3) befindet, die parallel zur Längsachse des Fahrzeugs und durch den Momentandrehpunkt (CIR_{b2}) verläuft, der in dem Moment effektiv ist, in dem der andere Einschlaganschlag erreicht wurde.

6. Lenksystem nach Anspruch 5, bei dem der Momentandrehpunkt CIR der dritten Notbetriebstrategie sich auf der Geraden (B2) lotrecht zu der Ebene des in Anschlag befindlichen Rads befindet, die durch den Bodenkontaktbereich des in Anschlag befindlichen Rads verläuft.

7. Lenksystem nach einem der vorhergehenden Ansprüche, bei dem die Rad-Aktoren elektrisch sind.
